Europäisches Patentamt

European Patent Office

Office européen des brevets

(19)

(11) EP 0 699 363 B1

(12) **EUROPEAN PATENT SPECIFICATION**

(45) Date of publication and mention
of the grant of the patent:
**15.09.1999 Bulletin 1999/37**

(21) Application number: **94915171.6**

(22) Date of filing: **17.05.1994**

(51) Int Cl.[6]: **H04J 3/06**, H04J 3/07,
H04L 25/38, H04L 7/02

(86) International application number:
**PCT/FI94/00195**

(87) International publication number:
**WO 94/27386 (24.11.1994 Gazette 1994/26)**

(54) **METHOD AND DEVICE FOR MAKING A JUSTIFICATION DECISION AT A NODE OF A SYNCHRONOUS DIGITAL TELECOMMUNICATION SYSTEM**

VERFAHREN UND VORRICHTUNG ZUM BESTIMMEN EINER STOPFENTSCHEIDUNG IN EINEM KNOTEN EINES SYNCHRONEN DIGITALEN NACHRICHTENÜBERTRAGUNGSSYSTEMS (SDH)

PROCEDE ET DISPOSITIF PERMETTANT LA PRISE D'UNE DECISION DE JUSTIFICATION AU NIVEAU D'UN SYSTEME DE TELECOMMUNICATION NUMERIQUE

(84) Designated Contracting States:
**BE CH DE DK FR GB IT LI NL PT SE**

(30) Priority: **18.05.1993 FI 932260**

(43) Date of publication of application:
**06.03.1996 Bulletin 1996/10**

(73) Proprietor: **NOKIA TELECOMMUNICATIONS OY**
**02150 Espoo (FI)**

(72) Inventor: **KAASINEN, Matti**
**FIN-00520 Helsinki (FI)**

(74) Representative: **Tomlinson, Kerry John**
**Frank B. Dehn & Co.,**
**European Patent Attorneys,**
**179 Queen Victoria Street**
**London EC4V 4EL (GB)**

(56) References cited:
| | |
|---|---|
| **EP-A- 0 503 732** | **US-A- 5 119 406** |
| **US-A- 5 132 970** | **US-A- 5 172 376** |
| **US-A- 5 260 940** | **US-A- 5 263 056** |

EP 0 699 363 B1

**Description**

The invention relates to a method for making a justification decision at a node of a synchronous digital telecommunication system, such as an SDH or SONET system, in which the incoming and outgoing signal have a frame structure that is formed of a predetermined number of bytes of constant length and comprises a pointer that indicates the payload phase within the frame structure. According to the method, data is stored in a buffer memory and a justification decision is made in response to the phase difference between a counter on the write side of the buffer memory and a counter on the read side of the buffer memory. The invention also relates to a device for making a justification decision at a node of a synchronous digital telecommunication system. The device comprises a buffer memory for temporary storing of data, write and read means for writing data into the buffer memory and for reading data from the buffer memory, said write and read means comprising write and read counters for generating write and read addresses, and decision making means for making a justification decision in response to the phase difference between a counter on the write side of the buffer memory and a counter on the read side of the buffer memory. Justification is performed in order to adjust the frame transmission rate (rate of reading from the buffer) to be identical to the frame reception rate (rate of writing into the buffer).

The current digital transmission network is plesiochronous, i.e. each 2 Mbit/s basic multiplex system has a dedicated clock independent of any other system. It is therefore impossible to locate a single 2 Mbit/s signal in the bit stream of a higher-order system; to extract the 2 Mbit/s signal, the higher-level signal has to be demultiplexed through each intermediate level down to the 2 Mbit/s level. For this reason, it has been expensive to construct especially branch connections requiring several multiplexers and demultiplexers. Another disadvantage of the plesiochronous transmission network is that equipments of two different manufacturers are usually not compatible.

The above drawbacks, among others, have led to the introduction of the new synchronous digital hierarchy SDH specified e.g. in CCITT Recommendations G.707 to G.709 and G.781 to G.784. The synchronous digital hierarchy is based on STM-N transfer frames (Synchronous Transport Modules) located on several levels of hierarchy N (N=1,4,16...). Existing PCM systems, such as 2, 8 and 34 Mbit/s systems, are multiplexed into a synchronous 155.520 Mbit/s frame of the lowest level of the SDH hierarchy (N=1). Consistently with the above, this frame is called the STM-1 frame. On the higher levels of hierarchy the bit rates are multiples of the bit rate of the lowest level. In principle, all nodes of the synchronous transmission network are synchronized with one clock. If some of the nodes should, however, lose connection with the common clock, it would lead to problems in the connections between the nodes. The phase of the frame must also be easy to recognize in the reception. Because of the above, SDH telecommunications have brought into use a pointer, which is a number indicating the phase of the payload within the frame, i.e. the pointer indicates that particular byte in the STM frame from which the payload begins.

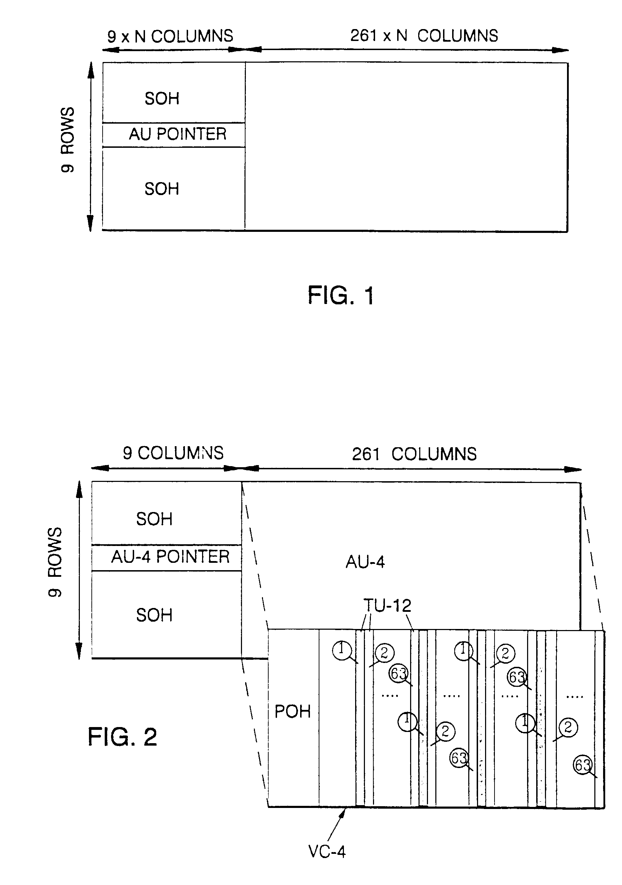

Fig. 1 illustrates the structure of an STM-N frame, and Fig. 2 illustrates a single STM-1 frame. The STM-N frame comprises a matrix with 9 rows and N x 270 columns such that there is one byte at the junction point of each row and column. Rows 1 to 3 and 5 to 9 of the first N x 9 columns comprise a section overhead SOH, and row 4 comprises an AU pointer. The rest of the frame structure is formed of a section having the length of N x 261 columns and containing the payload section of the STM-N frame.

Fig. 2 illustrates a single STM-1 frame, in which one row is 270 bytes in length as described above. The payload section comprises one or more administration units AU. In the example shown in the figure, the payload section consists of an administration unit AU-4, into which a virtual container VC-4 is inserted. (Alternatively, the STM-1 transfer frame may contain three administration units AU-3, each containing a corresponding virtual container VC-3). The VC-4 in turn consists of a path overhead POH located at the beginning of each row and having the length of one byte (9 bytes in all) and of a payload section in which there are lower-level frames also comprising bytes that allow interface justification to be performed in connection with mapping when the rate of the information signal to be mapped deviates from its nominal value to some extent.

Each byte in the administration unit AU-4 has its own location number. The above-mentioned AU pointer contains the location of the first byte of the virtual container VC-4 in the AU-4. The pointers allow the performance of positive or negative pointer justifications at different points in the SDH network. If a virtual container having a certain clock frequency is applied to a network node operating at a clock frequency lower than the above-mentioned clock frequency of the virtual container, the data buffer fills up. This calls for negative justification: one byte is transferred from the received VC (three bytes if the container is a VC-4) to the section overhead of the frame to be transmitted and the pointer value is correspondingly decreased by one. If the rate of the received VC is lower than the clock rate of the node, the data buffer tends to empty. This calls for positive justification: a stuff byte is added to the VC to be transmitted (three bytes if the container is a VC-4) and the pointer value is incremented by one.

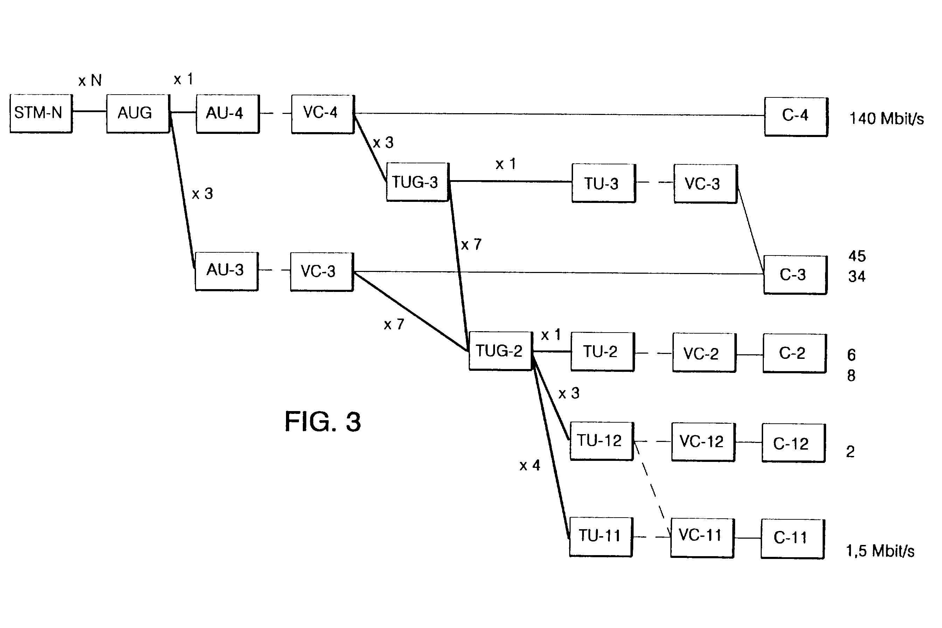

Fig. 3 shows how an STM-N frame can be formed of existing bit streams. At the first stage, these bit streams (1.5, 2, 6, 8, 34, 45 or 140 Mbit/s, shown on the right in the figure) are packed into containers C specified by CCITT. At the second stage, overhead bytes containing control data are inserted into the containers, whereby the above-described virtual container VC-11, VC-12, VC-2, VC-3 or VC-4 is obtained (the first suffix in the abbreviations represents the level of hierarchy; the second, the bit rate). This virtual container remains intact while it passes through the synchronous network up to its point of delivery. The virtual containers are further formed (depending on the level of hierarchy) either into so-called tributary units TU or into above-mentioned administration units AU (AU-3 and AU-4) by providing them with pointers. An administration unit AU can be mapped directly to an STM-1 frame, whereas the tributary units TU have to be assembled through tributary unit groups TUG and through VC-3 and VC-4 units to form administration units AU, which can then be mapped to the STM-1 frame. In Fig. 3, the mapping is indicated by a thin continuous line; the aligning, with a broken line; and the multiplexing, with a thicker continuous line.

As can be seen from Fig. 3, the STM-1 frame may be assembled in a number of alternative ways, and the contents of e.g. the highest-level virtual container VC-4 may vary, depending on the level where and the way how the assembly has been started. The STM-1 signal may thus contain e.g. 3 tributary units TU-3 or 21 tributary units TU-2 or 63 tributary units TU-12, or a combination of some of these units. As the higher-level unit contains several lower-level units, e.g. the VC-4 unit contains tributary units TU-12 (there are 63 such units in a single VC-4 unit, cf. Fig. 3), the lower-level units are mapped to the higher-level frame by interleaving such that from each lower-level unit are first taken, consecutively, the first bytes, then the second bytes, etc. The example of Fig. 2 shows that the VC-4 unit first contains, consecutively, the first bytes of all the 63 tributary units TU-12, then the second bytes of all the 63 tributary units TU-12, etc.

Since the above-described SDH frame structures do not fall within the scope of the actual inventive idea, nor does the assembly of such frame structures, they are not described in greater detail herein. The SDH frame structures and the assembly of such structures have been described e.g. in References [1] and [2], which are referred to for a more detailed description (the references are listed at the end of the specification).

At a node of a synchronous digital telecommunication system justification decisions (and thus justifications also) must sometimes be made at short intervals and sometimes not at all even though the difference in frequency between the incoming and outgoing signal (frame) remains the same. This is due to the fact that the overhead bytes of the STM-1 frame are all consecutively in a row in the frame (cf. Fig. 1). This adds the (phase) jitter of the system.

The object of the present invention is to solve the above-described problem and to provide a method and device for significantly reducing (phase) jitter caused by overhead bytes. This is achieved with the method and device according to the invention. The method according to the invention is characterized by using as said counters on the write side a separate control counter which is allowed to step primarily during each clock cycle in which data is written into the memory, and on the read side a separate control counter which is allowed to step primarily during each clock cycle in which data is read from the buffer memory, and by stopping each control counter several different times in a single row of the frame such that it is stopped for the duration of N bytes in all, the N bytes corresponding to the number of overhead bytes in a single row of the frame. The device according to the invention is characterized by comprising on the write side a separate control counter which is allowed to step primarily during each clock cycle in which data is written into the memory, and on the read side a separate control counter which is allowed to step primarily during each clock cycle in which data is read from the buffer memory, and control means connected with the control counters for stopping said counters several times in each row of the frame such that they are stopped for the duration of N bytes in all, the N bytes corresponding to the number of overhead bytes in a single row of the frame, whereby the outputs of the control counters are connected with a means which defines the phase difference of the control counters and which the decision making means are responsive to for making a justification decision on the basis of the phase difference of the control counters.

The basic idea of the invention is to convert the 1-row long sequence of the frame structure with relation to justification into a plurality of sequences, whereby justifications occur more evenly in respect of time.

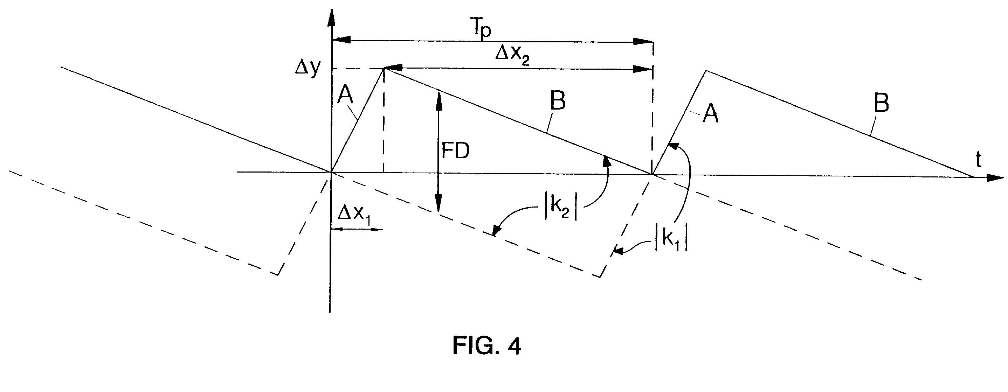

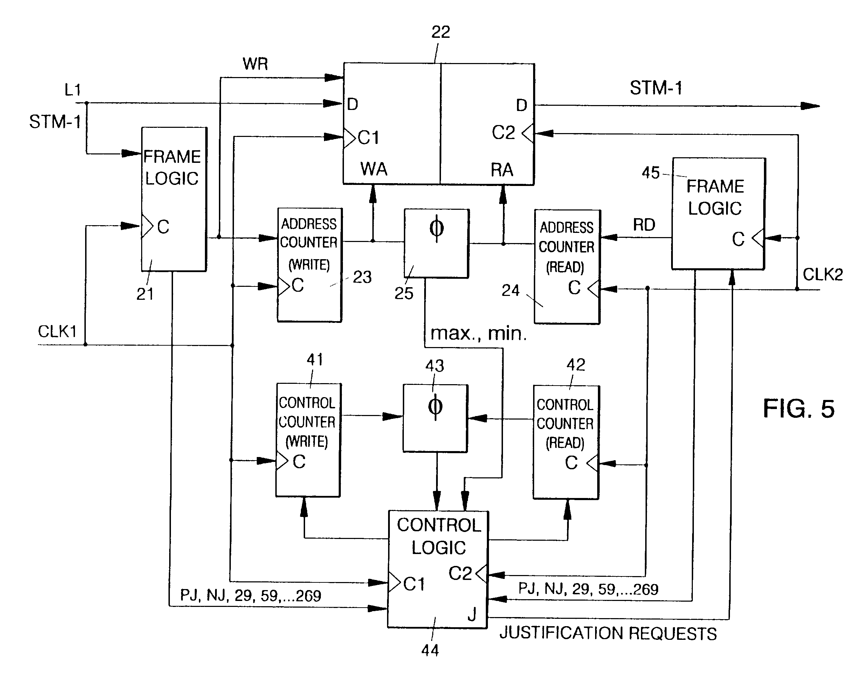

In the following the invention and its advantageous embodiments will be described in greater detail with reference to the examples according to accompanying Figs. 4 and 5 in the attached drawings, wherein

Fig. 1 illustrates the basic structure of an STM-N frame,
Fig. 2 illustrates the structure of a single STM-1 frame,
Fig. 3 shows how an STM-N frame can be formed of existing PCM systems,
Fig. 4 illustrates variations in the fill rate of an elastic buffer memory used at a node of a synchronous digital telecommunication system, and
Fig. 5 shows a block diagram of parts of a node in a synchronous digital telecommunication system, in which a solution according to the invention is used for making a justification decision.

By making the following two assumptions about the operation of the elastic buffer memory used at a node of the system, i.e. that

(a) by justifications, the rate at which the VC-4 frame is read from the buffer is maintained the same as the rate at which the frame is written into the memory, and

(b) the STM-1 frame is received at a constant rate and transmitted at a different constant rate,

it can be shown that the maximum and minimum fill rate of the VC-4 buffer memory vary in a single row of the STM-1 frame in the manner shown in Fig. 4. The upper curve drawn by a continuous line in the figure illustrates the maximum fill rate and the lower curve drawn by a broken line illustrates the minimum fill rate. The steep curve sections A correspond to the time period in which the section overheads SOH of the incoming and outgoing frame coincide. The fill rate is at its minimum at the beginning of the section overhead and at its maximum at the end of the section overhead, or vice versa. The shallow curve sections B correspond to the time period in which the section overheads SOH of the incoming and outgoing frame do not coincide at all. The difference FD in the minimum and maximum amplitude in the area where the sections B are one upon another (no section overhead SOH in either of the frames) corresponds to the length of the section overhead (9 bytes).

In Fig. 4 the time period $T_P$ corresponds to the period during which the incoming and outgoing frame slide past each other (the number of incoming frames exceeds the number of outgoing frames by one, or vice versa).

On the basis of Fig. 1, there can be obtained equations (1) and (2)

$$(1) \quad \begin{cases} k_1 = \dfrac{\Delta y}{\Delta x_1} \\ k_2 = \dfrac{\Delta y}{\Delta x_2} \end{cases}$$

$$(2) \quad \Rightarrow \frac{k_1}{k_2} = \frac{\Delta x_2}{\Delta x_1}$$

By the use of the above-described assumptions, there can be obtained (not shown) equation (3)

$$(3) \quad \begin{cases} |k_1| = S \cdot \dfrac{\Delta t}{T} \cdot \dfrac{1}{C \cdot T} \\ |k_2| = V \cdot \dfrac{\Delta t}{T} \cdot \dfrac{1}{C \cdot T} \end{cases}$$

where C is the length of the sequence [bytes], S is the proportion of the section overhead to the sequence C [bytes], V is the proportion of the virtual container VC-4 to the sequence C [bytes], T is the length of a clock cycle, and At is the difference between the clock cycle of the write clock managing the writing into the buffer memory and that of the read clock managing the reading from the buffer memory.

The length Tp of the 'sliding period' can be determined by equations (4) and (5) as follows

$$(4) \quad Tp = n \cdot C \cdot (T + \Delta t) = (n+1) \cdot C \cdot T$$

$$(5) \quad \Rightarrow n = \frac{C \cdot T}{C \cdot (T + \Delta t) - C \cdot T} = \frac{T}{\Delta t}$$

From equations (2), (3), (4) and (5) there can be derived equation (6) for the maximum amplitude Δy of the fill rate of the buffer memory

$$(6) \quad \Rightarrow \Delta y = k_1 \cdot \frac{T}{\Delta t} \cdot \frac{C \cdot (T + \Delta t)}{1 + \dfrac{k_1}{k_2}} = \frac{S \cdot V}{C} \cdot (1 + \frac{\Delta t}{T}) \simeq \frac{S \cdot V}{C}$$

In the invention the justification decisions are generated independently, i.e. independently of controlling the fill rate of the buffer memory by actual read and write counters and by a summer measuring their phase difference. By this, the effect of the section overhead on the control of the fill rate of the buffer memory and thereby on the occurrence (burstiness) of the justification decisions in respect of time can be significantly reduced. The more even occurrence of justifications in respect of time reduces the jitter of the system.

These advantages are achieved by spreading the effect of the nine SOH bytes in each row of the STM-1 frame evenly over the entire row, instead of their effect always showing as a single burst at the beginning of each row of the frame (cf. Fig. 1). In the invention a sequence that is nine SOH bytes and 261 VC-4 bytes in length is converted (with respect to justification) into nine different sequences, each of which has one SOH byte and 29 VC-4 bytes. When the section overhead, in respect of justification, is "fixed" (C=270) or "spread" (C=30), the following maximum amplitudes $\Delta y$ are obtained by formula (6):

$$(7) \quad \begin{cases} \Delta y_{270} = \dfrac{9 \cdot 261}{270} = 8,7 \\ \Delta y_{30} = \dfrac{1 \cdot 29}{30} = 0,97 \end{cases}$$

Fig. 5 shows a block diagram of parts of a node in a synchronous digital telecommunication system, in which a method according to the invention is used for making justification decisions. An STM-1 signal is supplied from a line L1 to a frame logic circuit 21 at the input of the node. In this circuit 21 the frame structure is disassembled and e.g. overhead bytes are extracted therefrom. The core of the device is formed by an elastic buffer memory 22, into which all the other bytes of the STM-1 frame except the bytes of the section overhead SOH are written. With the buffer memory 22 is connected a write counter 23 for controlling the writing into the buffer memory by supplying write addresses to the input WA (Write Address) of the buffer memory and a read counter 24 for controlling the reading from the buffer memory by supplying read addresses to the input RA (Read Address) of the read counter. The frame logic circuit 21 supplies to the write counter and elastic buffer 22 a signal WR that enables stepping of a write counter 23 and writing into the memory.

At the output side of the node there is a second frame logic circuit 45 that controls assembling of the outgoing STM-1 frame at the data output D of the elastic buffer. The frame logic circuit 45 supplies to a read counter 24 a signal RD that enables stepping of the counter, and reading.

The outputs of the write and read counter are connected not only with the elastic buffer memory but also with a summer 25, which counts the difference between the reading of the write counter and that of the read counter, i.e. the phase difference, which indicates the fill rate of the elastic buffer memory at a given time. The write counter steps synchronously with the clock signal CLK1 of the input side, and the read counter steps synchronously with the clock signal CLK2 of the output side. (Clock signals are supplied to clock inputs C, C1 or C2 of different blocks in accordance with the figure.)

The disassembly and assembly of the STM-1 frame, writing into the buffer memory and reading from the buffer memory are performed in a manner known per se, and thus they are not described in greater detail herein.

In accordance with the invention, to the node is added a counter 41 controlling the write side, a counter 42 controlling the read side and a second summer 43, to which the outputs of the counters 41 and 42 are connected. The node also comprises a separate control logic circuit 44, which controls the control counters 41 and 42 and if necessary sends justification requests to the frame logic circuit 45, which controls the forming of the outgoing frame. More particularly, the requests are sent to the pointer generator (not shown) of the frame logic circuit, which performs positive or negative justification in a manner known per se. The frame logic circuits 21 and 45 indicate the performed positive justifications PJ and negative justifications NJ to the control logic circuit 44 at the byte where the justification is performed. In addition, the frame logic circuits indicate every 30th clock cycle of every row of the frame to the control logic circuit, e.g. the clock cycles corresponding to bytes 29, 59, 89, 119, 149, 179, 209, 239 and 269 (cf. Fig. 5) in every row of the frame. (These points are obtained by taking every 30th reading of the column counter.) In principle, these points may be located anywhere in a row of the frame, as long as they are not points of justification and as long as their location is the same in every row of the frame. The control logic circuit 44 allows the control counters 41 and 42 of the write and read side to step in every (write and read) clock cycle, except in said every 30th clock cycle indicated by the frame logic circuits 21 and 45. Thus, every row of the STM-1 frame has 9 bytes in which the counters 41 and 42 do not step, and in this advantageous embodiment these points are divided at even intervals over the entire length of the row. The control counters thus indicate the data transmission rate on both sides, i.e. they indicate how much data has been written into the buffer and how much data has been read therefrom.

The summer 25 sends the control logic circuit 44 information about the minimum and maximum fill rates allowable. When the phase difference indicated by the summer 43 to the control logic circuit grows too great, the control logic circuit sends a justification request through the output J to the frame logic circuit 45. The frame logic circuit performs justification in a manner known per se, i.e. by filling the H3 bytes of the pointer with payload information and by correspondingly decreasing the pointer value by one (negative justification), or by filling three bytes that follow the H3 bytes with insignificant information (stuffing) and by correspondingly incrementing the pointer value by one (positive justification). The control logic circuit (which receives information about the performed justifications in the above manner) takes the justifications into account by allowing the counter (41 or 42) controlling the side where justification is performed (can be performed on either side) to step by double steps during said H3 bytes (negative justification) or by preventing the counter controlling the side where justification is performed from stepping during the three bytes following said H3 bytes (positive justification).

As the device is switched on, initial centring is usually performed to create a situation according to Fig. 4. Centring is performed as the fill rate of the elastic buffer memory exceeds the allowed maximum or falls below the allowed minimum. When such a minimum or maximum alarm is received from the buffer memory, the control logic circuit stops the control counter 42 of the read side or makes it step at double steps until the phase difference between the control counters reaches the limit (upper or lower limit) in which corresponding justification (positive or negative) eliminates the buffer memory alarm.

Even though the invention has been described above with reference to the examples according to the accompanying drawings, it is to be understood that the invention is not limited by them but may be modified within the inventive idea presented above and in the attached claims. Thus, although above there was described an embodiment in which both the incoming and outgoing signal are STM-1 signals, the signals may also be of some other level, whereby the number of times that the control counters are stopped varies accordingly, e.g. during a single row of an STM-4 frame the control counters are stopped for the duration of 36 bytes in all. In principle, the control counters need not be necessarily stopped at entirely even intervals, and also not for the duration of a single byte at a time, but by the above-described embodiment (stopping at even intervals) the best final result (smallest jitter) is obtained.

References:

[1] CCITT Blue Book, Recommendation G.709: "Synchronous Multiplexing Structure", May 1990
[2] SDH - Ny digital hierarki, TELE 2/90

## Claims

1. A method for performing justification at a node of a synchronous digital telecommunication system, such as an SDH or SONET system, in which the incoming and outgoing signal have a frame structure that is formed of a predetermined number of bytes of constant length and comprises a pointer that indicates the payload phase within the frame structure, said method comprising

   - storing data temporarily in a buffer memory (22) by writing data into said memory and thereafter reading said data out of said memory, said writing being controlled by a write counter (23) supplying write addresses, and said reading being controlled by a read counter (24) supplying read addresses,
   - making a justification decision in response to the phase difference between a counter on the write side of the buffer memory and a counter on the read side of the buffer memory, and
   - performing justification as a response to said decision, **characterized** by using as said counters

     on the write side a separate control counter (41) which is allowed to step primarily during each clock cycle in which data is written into the memory, and
     on the read side a separate control counter (42) which is allowed to step primarily during each clock cycle in which data is read from the buffer memory, and by
     stopping each control counter (41,42) several different times in a single row of the frame such that it is stopped for the duration of N bytes in all, the N bytes corresponding to the number of overhead bytes in a single row of the frame.

2. The method according to claim 1, **characterized** in that in a single row of the frame the control counters (41,42) are stopped essentially at equal time intervals at N bytes in all.

3. A device for performing justification at a node of a synchronous digital telecommunication system, such as an SDH or SONET system, in which the incoming and outgoing signal have a frame structure that is formed of a predetermined number of bytes of constant length and comprises a pointer that indicates the payload phase within the frame structure, the device comprising

   - a buffer memory (22) for temporary storing of data,
   - write and read means (21, 23; 45, 24) for writing data into the buffer memory (22) and for reading data from the buffer memory (22), said write and read means comprising write and read counters (23, 24) for generating write and read addresses, and
- decision making means (44) for making a justification decision in response to the phase difference between a counter on the write side of the buffer memory and a counter on the read side of the buffer memory, and
- means (45) for performing justification, said means being responsive to said decision making means,

**characterized** by further comprising

on the write side a separate control counter (41) which is allowed to step primarily during each clock cycle in which data is written into the memory, and
on the read side a separate control counter (42) which is allowed to step primarily during each clock cycle in which data is read from the buffer memory, and
control means (21, 45, 44) connected with the control counters for stopping said counters several times in each row of the frame such that they are stopped for the duration of N bytes in all, the N bytes corresponding to the number of overhead bytes in a single row of the frame,
whereby the outputs of the control counters (41, 42) are connected with a means (43) which defines the phase difference of the control counters and which the decision making means (44) are responsive to for making a justification decision on the basis of the phase difference of the control counters.

**Patentansprüche**

1. Verfahren zur Durchführung eines Stopfvorgangs an einem Knoten eines synchronen digitalen Nachrichtenübertragungssystems wie eines SDH- oder SONET-Systems, bei dem das ankommende und abgehende Signal eine Rahmenstruktur aufweisen, die aus einer vorbestimmten Anzahl an Bytes konstanter Länge gebildet ist und einen Zeiger aufweist, der die Nutzlastphase in der Rahmenstruktur anzeigt, mit den Schritten

vorübergehendes Speichern von Daten in einem Pufferspeicher (22) durch Schreiben von Daten in den Speicher und nachfolgendes Lesen der Daten aus dem Speicher, wobei das Schreiben durch einen Schreibadressen zuführenden Schreibzähler (23) gesteuert wird und das Lesen durch einen Leseadressen zuführenden Lesezähler (24) gesteuert wird,
Bestimmen einer Stopfentscheidung als Antwort auf die Phasendifferenz zwischen einem Zähler auf der Schreibseite des Pufferzählers und einem Zähler auf der Leseseite des Pufferspeichers und
Durchführen eines Stopfvorgangs als Antwort auf die Entscheidung,

**dadurch gekennzeichnet, daß** als die Zähler

auf der Schreibseite ein separater Steuerzähler (41), der sich während jedes Taktzyklus primär schrittweise ändern kann, in dem Daten in den Speicher geschrieben werden, und
auf der Leseseite ein separater Steuerzähler (42) verwendet werden, der sich während jedes Taktzyklus primär schrittweise ändern kann, in dem Daten aus dem Pufferspeicher gelesen werden, und
jeder Steuerzähler (41, 42) mehrere verschiedene Male in einer einzelnen Reihe des Rahmens derart angehalten wird, daß er für die Dauer von N Bytes insgesamt angehalten wird, wobei die N Bytes der Anzahl an Overhead-Bytes in einer einzelnen Reihe des Rahmens entsprechen.

2. Verfahren nach Anspruch 1, **dadurch gekennzeichnet, daß** die Steuerzähler (41, 42) in einer einzelnen Reihe des Rahmens im wesentlichen zu gleichen Zeitintervallen bei N Bytes insgesamt angehalten werden.

3. Vorrichtung zur Durchführung eines Stopfvorgangs an einem Knoten eines synchronen digitalen Nachrichtenübertragungssystems wie eines SDH- oder SONET-Systems, bei dem die ankommenden und abgehenden Signale eine Rahmenstruktur aufweisen, die aus einer vorbestimmten Anzahl an Bytes konstanter Länge gebildet ist und einen Zeiger aufweist, der die Nutzlastphase in der Rahmenstruktur anzeigt, mit

einem Pufferspeicher (22) zur vorübergehenden Speicherung von Daten,
Schreib- und Leseeinrichtungen (21, 23; 45, 24) zum Schreiben von Daten in den Pufferspeicher (22) und zum Lesen von Daten aus dem Pufferspeicher (22), wobei die Schreib- und Leseeinrichtungen Schreib- und Lesezähler (23, 24) zur Erzeugung von Schreib- und Leseadressen aufweisen,
einer Entscheidungsbestimmungseinrichtung (44) zur Bestimmung einer Stopfentscheidung als Antwort auf

**EP 0 699 363 B1**

die Phasendifferenz zwischen einem Zähler auf der Schreibseite des Pufferspeichers und einem Zähler auf der Leseseite des Pufferspeichers und

einer Einrichtung (45) zur Durchführung eines Stopfvorgangs, wobei die Einrichtung auf die Entscheidungsbestimmungseinrichtung anspricht,

**gekennzeichnet durch**

einen separaten Steuerzähler (41) auf der Schreibseite, der sich während jedes Taktzyklus primär schrittweise ändern kann, in dem Daten in den Speicher geschrieben werden,

einen separaten Steuerzähler (42) auf der Leseseite, der sich während jedes Taktzyklus primär schrittweise ändern kann, in dem Daten aus dem Pufferspeicher gelesen werden, und

eine mit den Steuerzählern verbundene Steuereinrichtung (21, 45, 44) zum Anhalten der Zähler mehrere Male in jeder Reihe des Rahmens derart, daß sie für die Dauer von N Bytes insgesamt angehalten werden, wobei die N Bytes der Anzahl an Overhead-Bytes in einer einzelnen Reihe des Rahmens entsprechen, wobei die Ausgänge der Steuerzähler (41, 42) mit einer Einrichtung (43) verbunden sind, die die Phasendifferenz der Steuerzähler festlegt und auf die die Entscheidungsbestimmungseinrichtung (44) zur Bestimmung einer Stopfentscheidung beruhend auf der Phasendifferenz der Steuerzähler anspricht.

**Revendications**

1. Procédé pour effectuer une justification à un noeud d'un système de télécommunication numérique synchrone, tel qu'un système SDH ou SONET, dans lequel le signal entrant et le signal sortant ont une structure de trame qui est formée d'un nombre prédéterminé d'octets de longueur constante et qui comporte un pointeur qui indique la phase des données utiles dans la structure de trame, ledit procédé comprenant les étapes consistant à

   - stocker temporairement des données dans une mémoire tampon (22) en inscrivant des données dans ladite mémoire, puis en extrayant lesdites données de ladite mémoire, l'écriture étant commandée par un compteur (23) d'écriture fournissant des adresses d'écriture, et l'extraction étant commandée par un compteur (24) de lecture fournissant des adresses de lecture,
   - prendre une décision de justification en réponse à la différence de phase entre un compteur du côté écriture de la mémoire tampon et un compteur du côté lecture de la mémoire tampon, et
   - effectuer une justification en tant que réponse à ladite décision, caractérisé par l'utilisation, en tant que dits compteurs

      du côté écriture, d'un compteur de commande séparé (41) qui est autorisé à avancer principalement pendant chaque cycle d'horloge au cours duquel des données sont inscrites dans la mémoire, et

      du côté lecture, d'un compteur de commande séparé (52) qui est autorisé à avancer principalement pendant chaque cycle d'horloge au cours duquel des données sont extraites de la mémoire tampon, et par une étape consistant à

   - arrêter chaque compteur de commande (41, 42) à plusieurs instants différents dans une seule rangée de la trame de façon qu'il soit arrêté pendant la durée de N octets en tout, les N octets correspondant au nombre d'octets supplémentaires dans une seule rangée de la trame.

2. Procédé selon la revendication 1, caractérisé en ce que dans une seule rangée de la trame les compteurs de commande (41, 42) sont arrêtés sensiblement à intervalles égaux en durée lors de N octets en tout.

3. Dispositif pour effectuer une justification à un noeud d'un système de télécommunication numérique synchrone, tel qu'un système SDH ou SONET, dans lequel le signal entant et le signal sortant ont une structure de trame qui est formée d'un nombre prédéterminé d'octets de longueur constante et qui comporte un pointeur qui indique la phase des données utiles dans la structure de trame, le dispositif comprenant

   - une mémoire tampon (22) pour le stockage temporaire de données,
   - des moyens d'écriture et de lecture (21, 23; 45, 24) pour inscrire des données dans la mémoire tampon (22) et pour extraire des données de la mémoire tampon (22), lesdits moyens d'écriture et de lecture comprenant des compteurs d'écriture et de lecture (23, 24) pour générer des adresses d'écriture et de lecture, et
   - un moyen (44) de prise de décision pour prendre une décision de justification en réponse à la différence de phase entre un compteur du côté écriture de la mémoire tampon et un compteur du côté écriture de la mémoire tampon, et
   - un moyen (45) pour effectuer une justification, ledit moyen réagissant audit moyen de prise de décision,

8

caractérisé en ce qu'il comprend en outre

du côté écriture, un compteur de commande séparé (41) qui est autorisé à avancer principalement pendant chaque cycle d'horloge au cours duquel des données sont inscrites dans la mémoire, et

du côté lecture, un compteur de commande séparé (42) qui est autorisé à avancer principalement pendant chaque cycle d'horloge au cours duquel des données sont extraites de la mémoire tampon, et

des moyens de commande (21, 45, 44) connectés aux compteurs de commande pour arrêter lesdits compteurs plusieurs fois dans chaque rangée de la trame de façon qu'ils soient arrêtés pendant la durée de N octets en tout, les N octets correspondant au nombre d'octets supplémentaires dans une seule rangée de la trame,

grâce à quoi les sorties des compteurs de commande (41, 42) sont couplées à un moyen (43) qui définit la différence de phase des compteurs de commande et auquel le moyen (44) de prise de décision réagit sur la base de la différence de phase des compteurs de commande.

9 x N COLUMNS     261 x N COLUMNS

9 ROWS

SOH

AU POINTER

SOH

## FIG. 1

9 COLUMNS     261 COLUMNS

9 ROWS

SOH

AU-4 POINTER

AU-4

SOH

TU-12

POH

FIG. 2

VC-4

FIG. 3

EP 0 699 363 B1

FIG. 4

FIG. 5